# EUROPÄISCHE PATENTSCHRIFT

(11) **EP 3 786 503 B1**
(45) Veröffentlichungstag und Bekanntmachung des Hinweises auf die Patenterteilung: **01.11.2023**
(21) Anmeldenummer: 20193010.4
(22) Anmeldetag: 27.08.2020
(51) Int. Cl.: F16K 37/00, F16K 27/08

(54) **STELLGERÄT FÜR EINE VERFAHRENSTECHNISCHE ANLAGE**
POSITIONING DEVICE FOR A PROCESS ENGINEERING SYSTEM
APPAREIL DE RÉGLAGE POUR UNE INSTALLATION TECHNIQUE

(30) Priorität: 27.08.2019 DE 202019104694 U
(43) Veröffentlichungstag der Anmeldung: 03.03.2021
(73) Patentinhaber: Samson Aktiengesellschaft, 60314 Frankfurt (DE)
(72) Erfinder: KRAUSE, Sebastian, 63486 Bruchköbel (DE); MERSCHER, Michael, 63322 Roedermark (DE); KOINKE, Janusz, 63179 Obertshausen (DE); KUEHNBAUM, Joerg, 55268 Nieder-Olm (DE)
(74) Vertreter: Puschmann Borchert Kaiser Klettner Patentanwälte Partnerschaft mbB

(56) Entgegenhaltungen:
- DE-A1-102013 101 302
- US-A1- 2015 059 874
- US-A1- 2017 016 749

## Beschreibung

Die Erfindung betrifft ein Stellgerät einer verfahrenstechnischen Anlage, gemäß der im Patentanspruch 1 angegebenen Art.

Ein Stellgerät der gattungsgemäßen Art dient dazu, eine Prozessfluidströmung einer prozesstechnischen Anlage einzustellen. Das Stellgerät umfasst einen Stellantrieb und eine Ventileinheit, deren Ventilgehäuse einen Einlass, einen Auslass und ein sich dazwischen entlang einer Längsachse erstreckenden Übergang aufweist, durch den das Prozessfluid strömen kann. Ein Stellglied ist im Ventilgehäuse verschiebbar gelagert, um den Übergang entsprechend der Einstellung eines Stellreglers zu weiten, zu verengen oder zu schließen. Der Stellantrieb hat die Aufgabe, ein von dem Stellregler kommendes Signal in eine Bewegung umzuwandeln, damit das Stellglied die entsprechende Stellung einnimmt. Der Stellantrieb kann über einen Rahmen, auch Joch genannt, möglichst versatzfrei und fluchtgenau mit dem Ventilgehäuse der Ventileinheit verbunden sein.

Stellgeräte können Sensoren aufweisen, die beispielsweise Prozessgrößen wie Druck, Temperatur, Durchfluss, usw. messen. Die gemessene physikalische Größe wird über einen Messumformer in ein elektrisches Signal umgeformt, das an einen Anzeiger, ein Aufzeichnungsgerät und/oder eine Steuerung übertragen und zu Regelaufgaben genutzt werden kann. Die Sensoren sind sowohl zur Signalübertragung als auch zu deren Energieversorgung über Verbindungskabel mit der Messvorrichtung verbunden, die z.B. im Bereich des Jochs und/oder des Stellantriebs angeordnet ist.

In der US 2002/0104568 A1 ist eine Absperrvorrichtung für eine verfahrenstechnische Anlage beschrieben, die insbesondere mit einem Ablassventil ausgebildet ist. Die Absperrvorrichtung umfasst ein Stellglied, das sich zwischen einer ersten Position, in der das Ventil geöffnet ist, und einer zweiten Position, in der das Ventil geschlossen ist, bewegt. Das Stellglied umfasst eine Ventilspindel und einen Ventilteller, an dem eine Mess- oder Detektionssonde angeordnet ist, um Prozessgrößen eines Prozessfluids zu bestimmen. Die Sonde ist insbesondere zur Messung der Temperatur des Prozessfluids ausgebildet und ist über Leitungen, die innerhalb der Ventilspindel verlaufen, mit einer Messvorrichtung verbunden.

Die US 2017/0016749 A1 offenbart eine Halterungseinrichtung zur Anordnung einer Steuereinheit an einem Stellgerät. Die Halterungseinrichtung weist eine erste und eine gegenüberliegende zweite Seite auf, wobei die erste Seite über Verbindungsmittel mit einem Joch verbunden ist, das den Stellantrieb und die Ventileinheit verbindet. An der zweiten Seite der Halterungseinrichtung ist die Steuereinheit angeordnet. Mindestens ein Sensor, der über ein kommunizierendes Kabel mit der Steuereinheit verbunden ist, überwacht die Eigenschaften der lösbaren Verbindung der Halterungseinrichtung. Die erste Seite der Halterungseinrichtung weist Rippen auf, die sich kreuzen und ein netzartiges Profil auf der Oberfläche bilden. Die Rippen sind derart ausgebildet, dass sie das Kabel beispielsweise in einer Nut, Aussparung oder Öffnung aufnehmen können. Auf diese Weise wird verhindert, dass die Leitung eingeklemmt, durchtrennt und / oder anderweitig beschädigt wird.

Die DE 10 2013 101 302 A1 offenbart ein kompaktes Abgasrückführungsventil, bei dem ein am Ventilgehäuse angebrachter Sensor über eine Sensorleitung mit einem Sensoradapter, der zwischen dem Ventilantrieb und dem Ventilgehäuse liegt, verbunden ist.

Die US 2015/059874 A1 offenbart ein Treibstoffzuführventil, das kartuschenartig aufgebaut ist, so dass ein flexibler Einsatz und eine einfache Wartung ermöglicht werden. Dazu ist ein Druckkanal in einem das Ventilgehäuse mit dem Antriebsteil verbindenden Joch vorgesehen, so dass die Messsensorik beabstandet zum Ventilgehäuse angeordnet sein kann.

Der Erfindung liegt die Aufgabe zu Grunde ein Stellgerät gemäß der im Patentanspruch 1 angegebenen Art derart weiterzubilden, dass ein erhöhter Schutz für eine Leitung, die einen am Ventilgehäuse angeordneten Sensor mit einer über das Joch beabstandeten Messvorrichtung verbindet, erzielt ist.

In bekannter Art und Weise umfasst ein Stellgerät einer verfahrenstechnischen Anlage einen Stellantrieb, der über ein Joch mit einem Ventilgehäuse einer Ventileinheit verbunden ist. Das Ventilgehäuse weist einen Anschlussbereich auf, der zur Verbindung mit dem Joch einen Gehäuseflansch aufweist. Das Ventilgehäuse weist zwischen einem Einlass und einem Auslass einen Übergang auf, durch den ein Prozessfluid strömen kann. Der Einlass und der Auslass sind jeweils in einem Fluidanschlussbereich des Ventilgehäuses angeordnet, der zur Verbindung mit einem Gegenstück der verfahrenstechnischen Anlage einen Flansch aufweisen kann. Im Übergang vom Einlass zum Auslass ist ein Stellglied angeordnet, das über den Stellantrieb insbesondere axial bewegbar ist und zur Einstellung der Prozessfluidströmung dient. Um die Strömung zu unterbrechen, wird der Verschlussteil des Stellglieds, z. B. ein Ventilteller oder ein Ventilkegel, in einer passend geformten Öffnung des Ventilgehäuses dichtend gegen die Oberfläche der Öffnung, auch Ventilsitz genannt, gepresst.

Ein Gehäuseflansch des Ventilgehäuses kann eine Aussparung und einen Jochbefestigungsbereich aufweisen, der als ein Lochkranz mit radial angeordneten Verbindungsbohrungen ausgebildet ist. Die Verbindungsbohrungen des Lochkranzes können beispielsweise symmetrisch angeordnet sein. Sie dienen zur Aufnahme von Verbindungsmitteln, z.B. Schrauben, über die ein Anpressdruck zur dichtenden und lösbaren Verbindung des Gehäuseflansches mit dem Joch aufbringbar ist, wobei der Anpressdruck möglichst gleichmäßig verteilt ist.

Die Aussparung des Gehäuseflansches ist im Grundmaterial des Gehäuseflansches ausgebildet. In vorteilhafter Weise ermöglicht die Aussparung, dass eine Leitung, insbesondere ein Kabel, durch den Gehäuseflansch führbar ist. Die Aussparung kann beispielsweise in axialer Längsrichtung des Gehäuseflansches ausgebildet sein. Der Durchmesser der Aussparung kann dem Durchmesser der Verbindungsbohrungen entsprechen, oder er kann abweichend sein.

Die Erfindung betrifft ein Stellgerät für eine verfahrenstechnische Anlage, umfassend einen Stellantrieb, der über ein Joch mit einem Ventilgehäuse einer Ventileinheit verbunden ist. Das Ventilgehäuse weist in Richtung Stellantrieb einen Gehäuseflansch auf, der z.B. einen Befestigungsbereich aufweisen kann, der mit einem Lochkranz ausgebildet ist, wobei der Lochkranz mit Verbindungbohrungen zur Aufnahme von Verbindungsmitteln ausgebildet ist, über die der Gehäuseflansch und das Joch miteinander verbindbar sind. Am Ventilgehäuse ist mindestens ein Sensor angeordnet. Der Sensor kann beispielsweise durch eine Bohrung des Ventilgehäuses in den Übergang zwischen dem Eingang und dem Ausgang des Ventilgehäuses hineinragen. Der Sensor kann zur Messung einer Prozessgröße des Prozessfluids ausgebildet sein. Der Sensor ist über mindestens eine Leitung, die insbesondere als eine elektrische Verkabelung ausgebildet ist, mit einer Messvorrichtung, die am Joch und/oder Stellantrieb angeordnet ist, kommunizierend verbunden. Die Messvorrichtung kann z.B. einen Messumformer und/oder einen Stellungsregler und/oder andere Peripheriegeräte umfassen.

Erfindungsgemäß ist die Leitung, die den Sensor mit der Messvorrichtung verbindet, in einer Aussparung des Gehäuseflansches aufgenommen. In vorteilhafter Weise vereinfacht die Aussparung die Führung der Leitung am Gehäuseflansch, so dass eine zusätzliche Fixierung oder Befestigung der Leitung am Gehäuseflansch vermeidbar ist. Die Leitung wird in der Aussparung des Gehäuseflansches geführt, wodurch die Leitung insbesondere vor Beschädigungen nah am Gehäuse geschützt ist, beispielsweise beim Transport oder anderen Handhabungen.

Weiter erfindungsgemäß umfasst das Joch mindestens zwei Trägersäulen und einen Dichtungsflansch, wobei der Dichtungsflansch zur Abdichtung des Ventilgehäuses mit dem Gehäuseflansch verbunden ist, und die Trägersäulen den Dichtungsflansch mit einer Anbindung des Stellantriebs verbinden, so dass der Dichtungsflansch und der Stellantrieb in Längsrichtung der Trägersäulen beabstandet zueinander angeordnet sind. Die Verwendung eines mit Trägersäulen ausgebildeten Jochs zwischen dem Stellantrieb und der Ventileinheit ermöglicht einen vereinfachten Zugriff auf die Antriebsstange zur Montage und/oder Wartung eines Feldgeräts. Dabei kann die Länge der Trägersäulen unter anderem auf die von außen einwirkende Umgebungstemperatur sowie auf die Prozesstemperatur innerhalb der Ventileinheit abgestimmt sein.

Der Dichtungsflansch des Jochs dient zur Montage des Jochs mit dem Gehäuseflansch des Ventilgehäuses. Der Dichtungsflansch ist als ein Abschluss oder Deckel des Ventilgehäuses ausgebildet, um die Ventileinheit in Richtung Stellantrieb abzudichten. Dabei kann der Dichtungsflansch des Jochs Verbindungsbohrungen aufweisen, die mit den Verbindungsbohrungen des Gehäuseflansches fluchten. Über Verbindungsmittel, z. B. Schrauben, welche die fluchtenden Verbindungsbohrungen durchsetzen, sind der Dichtungsflansch und der Gehäuseflansch lösbar miteinander verbunden.

Gemäß einer bevorzugten Ausführungsform weist der Dichtungsflansch eine Aussparung auf, die baueinheitlich mit dem Joch ausgebildet ist, wobei die Aussparung des Dichtungsflansches mit der Aussparung des Gehäuseflansches fluchtet. Die Aussparung des Dichtungsflansches geht in die Aussparung des Gehäuseflansches über. Dadurch geht die Führung der Leitung des Sensors, die in der Aussparung des Gehäuseflansches aufgenommen ist, direkt von der Aussparung des Gehäuseflansches in die Aussparung des Dichtungsflansches über. Der Übergang der Leitung vom Ventilgehäuse zum Joch verläuft jeweils innerhalb des radial äußeren Umfangs des Gehäuseflansches und des Dichtungsflansches, wodurch ein erhöhter Schutz der Leitung vor Beschädigungen, z. B. Einklemmen und/oder Durchtrennen der Leitung ermöglicht ist.

Vorzugsweise weist wenigstens eine Trägersäule eine Aussparung auf, wobei die Trägersäulen-Aussparung baueinheitlich mit dem Joch ausgebildet ist. Die Trägersäulen des Jochs sind stabil ausgeführt, um den vom Stellantrieb ausgeübten Kräften, Momenten und Drehmomenten standzuhalten. Die Trägersäulen-Aussparung ist im Grundmaterial der Trägersäule, das insbesondere aus Metall gebildet ist, angeordnet. In vorteilhafter Weise ist die Leitung des Sensors in der Trägersäulen-Aussparung geführt. Dabei wird die Leitung über die stabile Ausführung der Trägersäule vor Beschädigungen und Ausstrahlungen geschützt. Die Trägersäule kann auch zur Abschirmung von Strahlungen dienen, die entweder von der Leitung abstrahlen oder von außen auf die Leitung einwirken.

Gemäß einer bevorzugten Ausführungsform fluchten die Aussparung des Dichtungsflansches und die Aussparung der Trägersäule miteinander. Die Dichtungsflansch-Aussparung geht lückenlos in die Trägersäulen-Aussparung über, so dass die Leitung im Übergang vom Dichtungsflansch zur Trägersäule innerhalb des Grundmaterials des Jochs geschützt geführt ist. Das verhindert in vorteilhafter Weise, dass die Leitung im Übergang vom Dichtungsflansch zur Trägersäule eingeklemmt, durchtrennt und/oder anderweitig mechanisch beschädigt wird.

Bevorzugt ist die Trägersäulen-Aussparung über die gesamte Länge der Trägersäule ausgebildet. Die Länge des Jochs und insbesondere die Länge der Trägersäulen, die sich zwischen dem Dichtungsflansch und einem Anschluss mit dem Stellantrieb erstrecken, sind unter anderem auf die von außen einwirkende Umgebungstemperatur sowie auf die Prozesstemperatur innerhalb der Ventileinheit abgestimmt. Die Leitung des Sensors ist in der über die gesamte Länge der Trägersäule erstreckende Aussparung geführt. Das erhöht den Schutz der Leitung insbesondere vor mechanischen Beschädigungen wie Einklemmen und/oder Durchtrennen. Die Trägersäulen sind bevorzugt aus Metall ausgebildet und können auch vor Strahlungen schützen, beispielsweise Abstrahlungen der Leitung oder Strahlungen die von außen auf die Leitung einwirken.

Vorzugsweise sind die Trägersäulen jeweils hinter den Fluidanschlussbereichen, die jeweils den Einlass und den Auslass des Ventilgehäuses aufweisen, angeordnet, wobei die Trägersäulen in einem Winkel von 0° bis 15° gegenüber der Hauptachse zwischen dem Einlass und dem Auslass angeordnet sind. Die Fluidanschlussbereiche des Ventilgehäuses weisen beispielsweise jeweils einen Flansch als Verbindungselement zu einem Gegenstück der verfahrenstechnischen Anlage auf. Der Flansch erstreckt sich in einer Auskragung, die teilweise über das Ventilgehäuse hinausragt, wodurch hinter den Fluidanschlussbereichen ein erhöhter Schutz vor mechanischen Beschädigungen bewirkt ist. Dadurch ist insbesondere die Leitung des Sensors gut geschützt, weil sie hinter dem Fluidanschlussbereich von der Messvorrichtung durch die Trägersäulen-Aussparung und durch die Dichtungsflansch-Aussparung in die Aussparung des Gehäuseflansches und, nach Austreten aus der Aussparung des Gehäuseflansches, außen am Ventilgehäuse zum Sensor geführt wird, der bevorzugt auch hinter dem Fluidanschlussbereich am Ventilgehäuse angeordnet ist. In vorteilhafter Weise wird die Leitung überwiegend geschützt hinter dem jeweiligen Fluidanschlussbereich geführt.

Gemäß einer Ausführungsform ist die Aussparung des Gehäuseflansches als ein in Radialrichtung nach außen zurückgesetzter Abschnitt ausgebildet. Die Aussparung ist als eine Nut, oder ein offener Schlitz/Kanal innerhalb des maximalen Umfangs des Gehäuseflansches ausgebildet, so dass die in der Aussparung geführte Leitung vor Beschädigungen wie Einklemmen, Durchtrennen, usw. besser geschützt ist.

Auf ähnliche Weise können die Aussparung des Dichtungsflansches und/oder die Aussparung der Trägersäule als ein in Radialrichtung nach außen zurückgesetzter Abschnitt ausgebildet sein.

Gemäß einer alternativen Ausführungsform weist die Aussparung des Gehäuseflansches eine geschlossene Querschnittskontur auf. Insbesondere kann die gesamte Aussparung des Gehäuseflansches vom Grundmaterial des Gehäuseflansches radial umschlossen sein, wodurch die Leitung in der Aussparung vor Beschädigungen und Abstrahlungen besser geschützt ist, insbesondere durch die metallische Abschirmung des Gehäuseflansches. Es ist auch möglich, dass die Aussparung abschnittsweise radial umschlossen ist, so dass sie in manchen Bereichen eine geschlossene und in anderen Bereichen eine offene Querschnittskontur aufweist.

Auch die Aussparung des Dichtungsflansches und/oder die Aussparung der Trägersäule können, wie oben beschrieben, eine geschlossene Querschnittskontur aufweisen, um einen erhöhten Schutz der geführten Leitung zu bewirken.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines erfindungsgemäßen Stellgeräts;
- Fig. 2: eine Schnittansicht eines mit einem Joch verbundenen Ventilgehäuses eines erfindungsgemäßen Stellgeräts; und
- Fig. 3: eine Querschnittsansicht einer Ventileinheit durch einen Gehäuseflansch von oben.

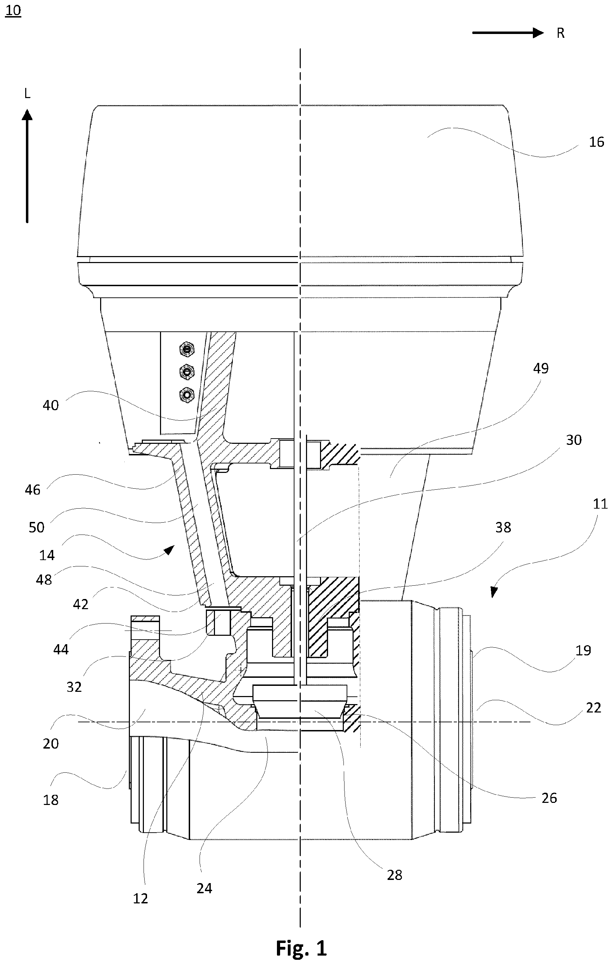

In Fig. 1 ist eine Darstellung eines erfindungsgemäßen Stellgeräts 10 in einer teilgeschnittenen Ansicht gezeigt. Das Stellgerät 10 umfasst eine Ventileinheit 11 deren Ventilgehäuse 12 über ein Joch 14 mit einem Stellantrieb 16 verbunden ist. Das Ventilgehäuse 12 weist vorliegend einen Einlass 20 und einen Auslass 22 auf, die jeweils in einem Fluidanschlussbereich 18, 19, angeordnet sind. Die Fluidanschlussbereiche 18, 19 dienen jeweils zur Verbindung mit einem Gegenstück der verfahrenstechnischen Anlage. Zwischen dem Einlass 20 und dem Auslass 22 erstreckt sich entlang einer Längsachse ein Übergang 24, durch den ein Prozessfluid strömen kann. Ein Ventilsitz 26 ist im Übergang 24 vom Einlass 20 zum Auslass 22 angeordnet. Die Öffnung des Ventilsitzes 26 wird über einen Ventilkegel 28 des Stellglieds freigegeben und/oder geschlossen, um einen Durchfluss des Prozessfluids vom Einlass 20 zum Auslass 22 zu gewährleisten oder zu hemmen. Der Ventilkegel 28 ist an einer Ventilstange 30 angeordnet, die mit dem Stellantrieb 16 verbunden ist.

Das Ventilgehäuse 12 ist über einen Gehäuseflansch 32 lösbar mit dem Joch 14 verbunden. Der Gehäuseflansch 32 weist zur Verbindung mit dem Joch 14 einen hier nicht dargestellten Jochbefestigungsbereich 33 mit einem Lochkranz 34 auf, der mit Verbindungsbohrungen 36 zur Aufnahme von Verbindungsmitteln, z. B. Schrauben, dient, über die ein Anpressdruck zur dichtenden und lösbaren Verbindung des Gehäuseflansches 32 mit dem Joch 14 aufbringbar ist.

Das Joch 14 ist vorliegend mit einem Dichtungsflansch 38 und zwei sich in axialer Längsrichtung L erstreckenden Trägersäulen 46 ausgebildet. Die Trägersäulen 46 verbinden den Dichtungsflansch 38 mit einer Anbindung 40, die den Stellantrieb 16 mit dem Joch 14 verbindet. Der Dichtungsflansch 38 ist lösbar mit dem Gehäuseflansch 32 der Ventileinheit 11 verbunden, und ist mit einem Deckel 42 ausgebildet, der die Ventileinheit 11 in Richtung Joch 14 abdichtet.

Erfindungsgemäß weist der mit dem Joch 14 verbundene Gehäuseflansch 32 zusätzlich zu den Verbindungsbohrungen 36 des Lochkranzes 34 mindestens eine Aussparung 44 auf. Vorliegend ist die Aussparung 44 radial vollständig von der Struktur des Gehäuseflansches 32 umschlossen. Es ist auch denkbar, dass die Aussparung 44 einen in Radialrichtung R des Gehäuseflansches 32 zurückgesetzten Abschnitt bildet, beispielsweise eine Nut oder eine Furche. Die Aussparung 44 kann in vorteilhafter Weise zur Führung einer Leitung, wie eine elektrische Verkabelung, dienen. Der Gehäuseflansch ist über einen hier nicht dargestellten Jochbefestigungsbereich 33 mit dem Dichtungsflansch 38 des Jochs 14 verbunden. Der Dichtungsflansch 38 weist zur Abdichtung des Ventilgehäuses 12 einen Deckel 42 auf.

Die Aussparung 44 des Gehäuseflansches 32 geht in die Aussparung 48 des Dichtungsflansches 38 über, die wiederum direkt und lückenlos in die Trägersäulen-Aussparung 50 übergeht, die sich vorliegend über die gesamte Länge der Trägersäule 46 erstreckt. Vorliegend ist die Aussparung 44 über ihre gesamte Länge von dem Grundmaterial des Gehäuseflansches 32 radial umschlossen. Die Dichtungsflansch-Aussparung 48 und die Trägersäulen-Aussparung 50 sind vom Grundmaterial des Jochs 14 vollständig umschlossen. Dadurch ist ein erhöhter Schutz insbesondere vor mechanischen Beschädigungen wie Einklemmen und/oder Durchtrennen für eine durch den Gehäuseflansch 32 und das Joch 14 geführte Leitung erzielbar. Die Trägersäule 44 ist bevorzugt aus Metall ausgebildet und kann vor Strahlungen schützen, beispielsweise Abstrahlungen der Leitung oder Strahlungen die von außen auf die Leitung einwirken.

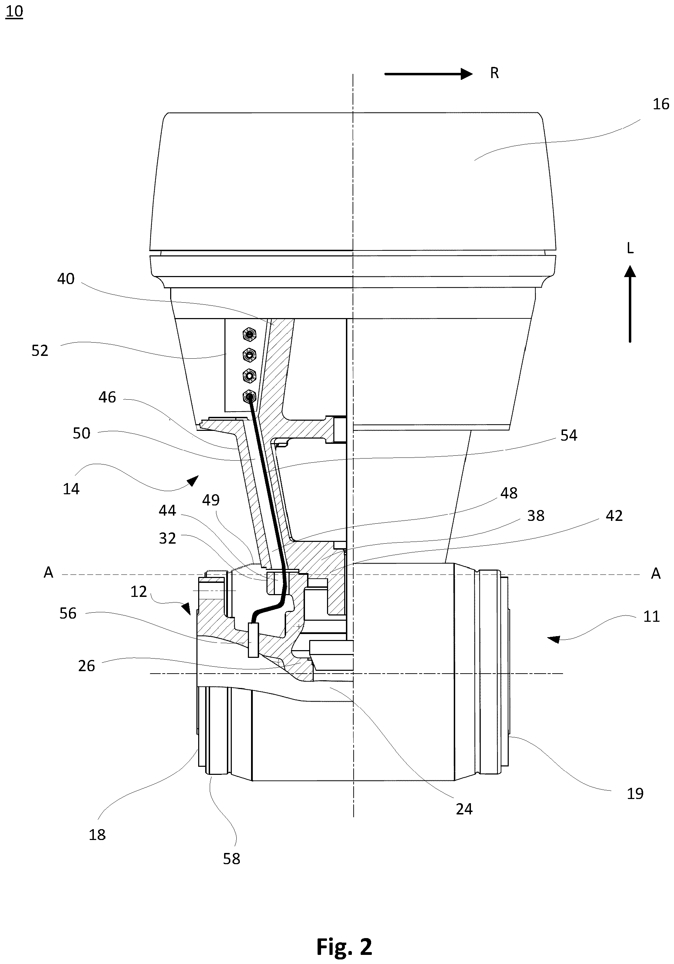

Fig. 2 zeigt eine Darstellung eines erfindungsgemäßen Stellgeräts 10 in einer teilgeschnittenen Ansicht.

Der Stellantrieb 16 des Stellgeräts 10 ist über das Joch 14 mit dem Ventilgehäuse 12 der Ventileinheit 11 verbunden. Das Stellgerät ist modular aufgebaut. Insbesondere sind das mit dem Stellantrieb verbundene Joch 14 und das Ventilgehäuse 12 kombinierbar, um eine große Flexibilität bei der Zusammenstellung des Stellgeräts 10 zu gewährleisten.

Eine Messvorrichtung 52 ist vorliegend an einem dem Ventilgehäuse 12 gegenüberliegenden Ende des Jochs 14 angeordnet. Es ist auch denkbar, dass ein Stellungsregler oder ein anderes Peripheriegerät am Joch 14 und/oder am Stellantrieb 12 angeordnet ist. Die Messvorrichtung 52 ist über eine Leitung 54, die insbesondere als eine elektrische Verkabelung ausgebildet ist, mit einem Sensor 56, der am Ventilgehäuse 12 angeordnet ist, verbunden. Vorliegend ist der Sensor 56 in einer Durchgangsbohrung des Ventilgehäuses 12 angeordnet, so dass er zwischen dem Einlass 20 und dem Auslass 22 in den Übergang 24 hineinragt, um beispielsweise eine Prozessgröße des Prozessfluids zu messen.

Der Sensor 56 ist vorliegend hinter dem Fluidanschlussbereich 18 angeordnet, der zur Verbindung mit einem Gegenstück der verfahrenstechnischen Anlage mit einem Flansch 58 ausgebildet ist. Der Flansch 58 erstreckt sich folglich in einer Auskragung, die teilweise über das Ventilgehäuse 12 hinausragt. Die Leitung 54 des Sensors 56 ist hinter dem Fluidanschlussbereich 18, d. h. hinter der Auskragung des Flansches 58, außen am Ventilgehäuse 12 angeordnet, und verläuft unverdeckt bis zur Aussparung 44 des Gehäuseflansches 32. Die unverdeckte, außen am Ventilgehäuse 12 verlaufende Leitung 54 wird in vorteilhafter Weise durch den radial auskragenden Flansch 58 insbesondere vor mechanischen Beschädigungen geschützt. Ferner kann, wie vorliegend, hinter dem Fluidanschlussbereich 18 zwischen dem auskragenden Flansch 58 und dem Joch 14 ein Mantel 49 angeordnet sein, beispielsweise ein angeschraubter Blechmantel, der den Bereich, in dem die freiliegende Leitung 54 angeordnet ist, umschließt und dadurch den Schutz der Leitung 54 erhöht.

Wie in Fig. 2 dargestellt ist, wird die Leitung 54 in der Aussparung 44 des Gehäuseflansches 32 geführt. Vorliegend ist die Aussparung 44 über ihre gesamte Länge von dem Grundmaterial des Gehäuseflansches 32 radial umschlossen. Die Aussparung 44 des Gehäuseflansches 32 fluchtet mit der Dichtungsflansch-Aussparung 48, die lückenlos in die Trägersäulen-Aussparung 50 übergeht. Vorliegend erstreckt sich die Trägersäulen-Aussparung 50 über die gesamte Länge der Trägersäule 46. Die Dichtungsflansch-Aussparung 48 und die Trägersäulen-Aussparung 50, in denen die Leitung 54 geführt ist, weisen vorliegend über ihre gesamte Länge eine geschlossene Querschnittskontur auf. Die Leitung 54 ist innerhalb der jeweiligen Struktur des Gehäuseflansches 32 und des Jochs 14 geführt, wodurch ein erhöhter Schutz der Leitung 54 sowohl vor mechanischen Beschädigungen als auch vor Strahlungen möglich ist.

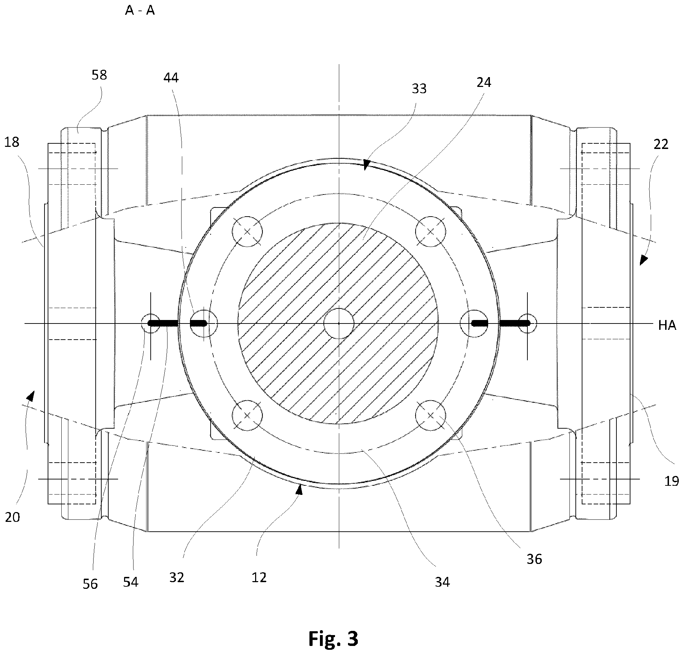

In Fig. 3 ist ein Querschnitt A-A des Gehäuseflansches 32 des Stellgeräts 10 aus Fig. 2 dargestellt. Das Ventilgehäuse 12 weist einen Gehäuseflansch 32 auf, der mit einem hier nicht dargestellten Dichtungsflansch 38 des Jochs 14 verbindbar ist. Erfindungsgemäß weist der Gehäuseflansch 32 eine Aussparung 44 und einen Jochbefestigungsbereich 33, der als ein Lochkranz 34 mit radial angeordneten Verbindungsbohrungen 36 ausgebildet ist, auf. Vorliegend ist die Aussparung 44 radial vom Gehäuseflansch 32 umschlossen. Die Verbindungsbohrungen 36 des Gehäuseflansches sind vorliegend symmetrisch angeordnet. Sie dienen zur Aufnahme von Verbindungsmitteln, z. B. Schrauben, über die ein Anpressdruck zur dichtenden und lösbaren Verbindung des Gehäuseflansches 32 mit dem Dichtungsflansch 38 des Jochs 14 aufgebracht wird.

Das Ventilgehäuse 12 weist zwischen dem Einlass 20 und dem Auslass 22 einen Übergang 24 auf, durch den das Prozessfluid strömen kann. Der Einlass 20 und der Auslass 22 sind jeweils in einem Fluidanschlussbereich 18, 19 ausgebildet, der einen auskragenden Flansch 58 aufweist. Ein Sensor 56 ist vorliegend hinter dem Fluidanschlussbereich 18 am Ventilgehäuse 12 angeordnet. Der Sensor 56 ist über die Leitung 54 mit einer hier nicht dargestellten Messvorrichtung 52 kommunizierend verbunden, wobei die Leitung 54 außen am Ventilgehäuse 12 vom Sensor 56 bis zur Aussparung 44 des Gehäuseflansches 32 angeordnet ist, wonach die Führung der Leitung 54 in die Aussparung 44 des Gehäuseflansches 32, dann in die hier nicht dargestellte Dichtungsflansch-Aussparung 48 und anschließend in die Trägersäulen-Aussparung 50 übergeht. Die hier nicht dargestellten Trägersäulen 46 sind jeweils hinter den beiden Fluidanschlussbereichen 18, 19 in einem Winkel von 0° bis 15° gegenüber der Hauptachse HA zwischen dem Einlass 20 und dem Auslass 22 angeordnet. Vorliegend ist die gesamte Führung der Leitung 54 in vorteilhafter Weise vor Hintergreifungen und mechanischen Beschädigungen geschützt hinter dem auskragenden Flansch 58 des Fluidanschlussbereiches 18 angeordnet.

### Bezugszeichenliste

- 10: Stellgerät
- 11: Ventileinheit
- 12: Ventilgehäuse
- 14: Joch
- 16: Stellantrieb
- 18: Fluidanschlussbereich
- 19: Fluidanschlussbereich
- 20: Einlass
- 22: Auslass
- 24: Übergang
- 26: Ventilsitz
- 28: Ventilkegel
- 30: Ventilstange
- 32: Gehäuseflansch
- 33: Jochbefestigungsbereich
- 34: Lochkranz
- 36: Verbindungsbohrung
- 38: Dichtungsflansch
- 40: Anbindung
- 42: Deckel
- 44: Aussparung des Gehäuseflansches
- 46: Trägersäule
- 48: Aussparung des Dichtungsflansches
- 49: Mantelgehäuse
- 50: Trägersäulen-Aussparung
- 52: Messvorrichtung
- 54: Leitung
- 56: Sensor
- 58: Flansch
- L: Längsrichtung
- R: Radialrichtung
- HA: Hauptachse

## Patentansprüche

1. Stellgerät (10) für eine verfahrenstechnische Anlage, umfassend ein Joch (14), eine Ventileinheit (11) mit einem Ventilgehäuse (12) und einen Stellantrieb (16), der über das Joch (14) beabstandet mit dem Ventilgehäuse (12) verbunden ist, wobei das Ventilgehäuse (12) einen Gehäuseflansch (32) aufweist, der lösbar mit dem Joch (14) verbunden ist, wobei das Ventilgehäuse (12) zur Durchströmung eines Prozessfluids einen Einlass (20) und einen Auslass (22) aufweist, wobei der Einlass (20) und der Auslass (22) jeweils in einem Fluidanschlussbereich (18, 19) angeordnet sind, wobei im Übergang (24) vom Einlass (20) zum Auslass (22) ein über den Stellantrieb (16) bewegliches Stellglied zur Regelung der Durchflussmenge des Prozessfluids angeordnet ist, und wobei am Ventilgehäuse (12) ein Sensor (56) angeordnet ist, der über eine Leitung (54) kommunizierend mit einer am Joch (14) und/oder am Stellantrieb (16) angeordneten Messvorrichtung (52) verbunden ist, wobei die Leitung (54) in einer Aussparung (44) des mit dem Joch (14) verbundenen Gehäuseflansches (32) des Ventilgehäuses (12) aufgenommen **ist,dadurch gekennzeichnet, dass** das Joch (14) mindestens zwei Trägersäulen (46) und einen Dichtungsflansch (38) umfasst, wobei der Dichtungsflansch (38) zur Abdichtung des Ventilgehäuses (12) mit dem Gehäuseflansch (32) verbunden ist, und die Trägersäulen (46) den Dichtungsflansch (38) mit einer Anbindung (40) des Stellantriebs (16) verbinden, so dass der Dichtungsflansch (38) und der Stellantrieb (16) in Längsrichtung (L) der Trägersäulen (46) beabstandet zueinander angeordnet sind.

2. Stellgerät nach Anspruch 1, **dadurch gekennzeichnet, dass** der Dichtungsflansch (38) eine Aussparung (48) aufweist, die baueinheitlich mit dem Joch (14) ausgebildet ist, wobei die Dichtungsflansch-Aussparung (48) mit der Aussparung (44) des Gehäuseflansches (32) fluchtet.

3. Stellgerät nach Anspruch 1, **dadurch gekennzeichnet, dass** wenigstens eine Trägersäule (46) eine Aussparung (50) aufweist, wobei die Trägersäulen-Aussparung (50) baueinheitlich mit dem Joch (14) ausgebildet ist.

4. Stellgerät nach den Ansprüchen 2 und 3, **dadurch gekennzeichnet, dass** die Dichtungsflansch-Aussparung (48) und die Trägersäulen-Aussparung (50) miteinander fluchten.

5. Stellgerät nach einem der vorangehenden Ansprüche 3 und 4, **dadurch gekennzeichnet, dass** die Trägersäulen-Aussparung (50) über die gesamte Länge der Trägersäule (46) ausgebildet ist.

6. Stellgerät nach einem der vorangehenden Ansprüche, **dadurch gekennzeichnet, dass** die Trägersäulen (46) jeweils hinter dem Fluidanschlussbereich (18, 19), der jeweils den Einlass (20) und den Auslass (22) aufweist, angeordnet sind, wobei die Trägersäulen (46) in einem Winkel von 0° bis 15° gegenüber der Hauptachse (H) zwischen dem Einlass (20) und dem Auslass (22) angeordnet sind.

7. Stellgerät nach einem der vorangehenden Ansprüche, **dadurch gekennzeichnet, dass** die Aussparung (44) des Gehäuseflansches (32) als ein in Radialrichtung (R) nach außen zurückgesetzter Abschnitt ausgebildet ist.

8. Stellgerät nach einem der vorangehenden Ansprüche 3 und 4 oder nach einem auf einen dieser Ansprüche rückbezogenen Anspruch, **dadurch gekennzeichnet, dass** die Dichtungsflansch-Aussparung (48) und/oder die Trägersäulen-Aussparung (50) als ein in Radialrichtung (R) nach außen zurückgesetzter Abschnitt ausgebildet sind.

9. Stellgerät nach einem der vorangehenden Ansprüche, **dadurch gekennzeichnet, dass** die Aussparung (44) des Gehäuseflansches (32) eine geschlossene Querschnittskontur aufweist.

10. Stellgerät nach einem der vorangehenden Ansprüche 3 und 4 oder nach einem auf einen dieser Ansprüche rückbezogenen Anspruch, **dadurch gekennzeichnet, dass** die Dichtungsflansch-Aussparung (48) und/oder die Trägersäulen-Aussparung (50) eine geschlossene Querschnittskontur aufweisen.

## Claims

1. Positioning device (10) for a process engineering system, comprising:
a yoke (14), a valve unit (11) having a valve body (12), and an actuator (16) that is connected to, and spaced from, the valve body (12) via the yoke (14), the valve body (12) having a housing flange (32) that is detachably connected to the yoke (14), the valve body (12) having an inlet (20) and an outlet (22) for the flow of a process fluid therethrough, the inlet (20) and the outlet (22) each being located in a fluid connection region (18, 19), and wherein, in the passage (24) from the inlet (20) to the outlet (22), an actuating member adapted to be displaced by the actuator (16) is arranged for controlling the flow rate of the process fluid, and wherein a sensor (56) is arranged on the valve body (12), which sensor is connected via a line (54) for communication with a measuring device (52) arranged on the yoke (14) and/or on the actuator (16), wherein the line (54) is received in a recess (44) of the housing flange (32) of the valve body (12) connected to the yoke (14), **characterized in that** the yoke (14) comprises at least two support columns (46) and a sealing flange (38), which sealing flange (38) is connected to the housing flange (32) for sealing the valve body (12), and which support columns (46) connect the sealing flange (38) to a connection (40) of the actuator (16), with the result that the sealing flange (38) and the actuator (16) are arranged spaced apart from one another in the longitudinal direction (L) of the support columns (46).

2. Positioning device (10) according to claim 1, **characterized in that** the sealing flange (38) has a recess (48) which is formed integrally with the yoke (14), which sealing flange recess (48) is aligned with the recess (44) of the housing flange (32).

3. Positioning device according to claim 1, **characterized in that** at least one support column (46) has a recess (50) made therein, which support column recess (50) is formed integrally with the yoke (14).

4. Positioning device according to claims 2 and 3, **characterized in that** the sealing flange recess (48) and the support column recess (50) are aligned with one another.

5. Positioning device according to claims 3 and 4 above, **characterized in that** the support column recess (50) is provided over the entire length of the support column (46).

6. Positioning device according to any one of the preceding claims, **characterized in that** the support columns (46) are each arranged behind the fluid connection region (18, 19) which includes both the inlet (20) and the outlet (22), which support columns (46) are arranged between the inlet (20) and the outlet (22) at an angle of between 0° and 15° with respect to the main axis (HA).

7. Positioning device according to any one of the preceding claims, **characterized in that** the recess (44) of the housing flange (32) is formed as a portion that is recessed outwardly in a radial direction (R).

8. Positioning device according to any one of claims 3 and 4 above, or according to any claim referred back to one of these claims, **characterized in that** the sealing flange recess (48) and/or the support column recess (50) is/are formed as a portion that is recessed outwards in a radial direction (R).

9. Positioning device according to any one of the preceding claims, **characterized in that** the recess (44) of the housing flange (32) has a closed cross-sectional contour.

10. Positioning device according to any one of claims 3 and 4 above, or according to any claim referred back to one of these claims, **characterized in that** the sealing flange recess (48) and/or the support column recess (50) has/have a closed cross-sectional contour.

## Revendications

1. Appareil de réglage (10) pour une installation industrielle, comprenant une culasse (14), une unité de soupape (11) avec un boîtier de soupape (12) et un entraînement de réglage (16) qui est relié à distance au boîtier de soupape (12) via la culasse (14), dans lequel le boîtier de soupape (12) présente une bride de boîtier (32) qui est reliée de façon amovible à la culasse (14), dans lequel le boîtier de soupape (12) présente une admission (20) et une évacuation (22) pour l'écoulement d'un fluide de processus, dans lequel l'admission (20) et l'évacuation (22) sont respectivement agencées dans une zone de raccordement de fluide (18, 19), dans lequel un organe de réglage pouvant être déplacé via l'entraînement de réglage (16) est agencé dans le passage (24) de l'admission (20) à l'évacuation (22) pour le réglage du débit du fluide de processus, et dans lequel au niveau du boîtier de soupape (12) est agencé un capteur (56) qui est relié, via une conduite (54), en communication avec un dispositif de mesure (52) agencé au niveau de la culasse (14) et/ou de l'entraînement de réglage (16), dans lequel la conduite (54) est reçue dans un évidement (44) de la bride de boîtier (32) du boîtier de soupape (12) reliée à la culasse (14), **caractérisé en ce que** la culasse (14) comprend au moins deux colonnes de support (46) et une bride d'étanchéité (38), dans lequel la bride d'étanchéité (38) est reliée à la bride de boîtier (32) pour l'étanchéité du boîtier de soupape (12), et les colonnes de support (46) relient la bride d'étanchéité (38) à un raccordement (40) de l'entraînement de réglage (16), de sorte que la bride d'étanchéité (38) et l'entraînement de réglage (16) soient agencés à distance l'un de l'autre dans la direction longitudinale (L) des colonnes de support (46).

2. Appareil de réglage selon la revendication 1, **caractérisé en ce que** la bride d'étanchéité (38) présente un évidement (48) qui est conçu de façon à former une unité de construction avec la culasse (14), dans lequel l'évidement de bride d'étanchéité (48) est aligné avec l'évidement (44) de la bride de boîtier (32).

3. Appareil de réglage selon la revendication 1, **caractérisé en ce qu'au** moins une colonne de support (46) présente un évidement (50), dans lequel l'évidement de colonnes de support (50) est conçu de façon à former une unité de construction avec la culasse (14).

4. Appareil de réglage selon les revendications 2 et 3, **caractérisé en ce que** l'évidement de bride d'étanchéité (48) et l'évidement de colonnes de support (50) sont alignés l'un avec l'autre.

5. Appareil de réglage selon l'une des revendications précédentes 3 et 4, **caractérisé en ce que** l'évidement de colonnes de support (50) est conçu sur toute la longueur de la colonne de support (46).

6. Appareil de réglage selon l'une des revendications précédentes, **caractérisé en ce que** les colonnes de support (46) sont respectivement agencées derrière la zone de raccordement de fluide (18, 19) qui présente respectivement l'admission (20) et l'évacuation (22), dans lequel les colonnes de support (46) sont agencées entre l'admission (20) et l'évacuation (22) selon un angle de 0° à 15° par rapport à l'axe principal (H).

7. Appareil de réglage selon l'une des revendications précédentes, **caractérisé en ce que** l'évidement (44) de la bride de boîtier (32) est conçu en tant que section reculée vers l'extérieur dans une direction radiale (R).

8. Appareil de réglage selon l'une des revendications précédentes 3 et 4 ou selon une revendication se référant à l'une de ces revendications, **caractérisé en ce que** l'évidement de bride d'étanchéité (48) et/ou l'évidement de colonnes de support (50) sont conçus en tant que section reculée vers l'extérieur dans une direction radiale (R).

9. Appareil de réglage selon l'une des revendications précédentes, **caractérisé en ce que** l'évidement (44) de la bride de boîtier (32) présente un contour transversal fermé.

10. Appareil de réglage selon l'une des revendications précédentes 3 et 4 ou selon une revendication se référant à l'une de ces revendications, **caractérisé en ce que** l'évidement de bride d'étanchéité (48) et/ou l'évidement de colonnes de support (50) présentent un contour transversal fermé.
